# EUROPÄISCHE PATENTANMELDUNG

(11) **EP 4 703 666 A1**
(43) Veröffentlichungstag der Anmeldung: **04.03.2026**
(21) Anmeldenummer: 25194923.6
(22) Anmeldetag: 08.08.2025
(51) Int. Cl.: F28D 1/047, F28D 7/14, F28D 15/00, F28F 1/32, F25B 39/02, F28D 1/04

(54) **WÄRMETAUSCHER, KLIMATISIERUNGSANORDNUNG UND SCHALTSCHRANK**

(30) Priorität: 27.08.2024 DE 202024104819 U
(71) Anmelder: Pfannenberg GmbH, 21035 Hamburg (DE)
(72) Erfinder: Wagner, Torben, 21035 Hamburg (DE)
(74) Vertreter: RGTH

(57) **Zusammenfassung**

Die Erfindung betrifft einen Wärmetauscher (100), insbesondere Wärmetauscher (100) zur Schaltschrankklimatisierung, mit einem Rohrleitungssystem (10), das zur Leitung eines Kältemittels (12) ausgebildet ist und mehrere Rohrstücke (13) ) sowie mindestens ein Rohrstückverbindungselement (14) umfasst, wobei das mindestens ein Rohrstückverbindungselement (14) jeweils zwei Endabschnitte (151, 152) der Rohrstücke (13) fluidleitend miteinander verbindet, und einem Wärmeübertragungselement (11), das vorzugsweise als Rippenanordnung (111) mit einer Vielzahl von Rippen (16) ausgebildet ist, wobei das Wärmeübertragungselement (11) die Rohrstücke (13) des Rohrleitungssystems (10) derart aufnimmt, dass die Endabschnitte (151, 152) der Rohrstücke (13) aus dem Lamellenpaket (11) herausragen. Ferner ist mindestens eine Kapseln (171, 172) vorgesehen, wobei die Endabschnitte (151, 152) der Rohrstücke (13) des Rohrleitungssystems (10) in die mindestens eine Kapsel (171, 172) münden, sodass das mindestens eine Rohrstückverbindungselement (14) innerhalb der mindestens einen Kapsel (171, 172) angeordnet ist.

## Beschreibung

Die Erfindung betrifft einen Wärmetauscher, insbesondere einen Wärmetauscher zur Schaltschrankklimatisierung, mit einem Rohrleitungssystem, das zur Leitung eines Kältemittels ausgebildet ist und mehrere Rohrstücke sowie mindestens ein Rohrstückverbindungselement umfasst, wobei das mindestens eine Rohrstückverbindungselement zwei oder mehr Endabschnitte der Rohrstücke fluidleitend miteinander verbindet, und mit einem Wärmeübertragungselement, das vorzugsweise als Rippenanordnung mit einer Vielzahl von Rippen ausgebildet ist, wobei das Wärmeübertragungselement die Rohrstücke des Rohrleitungssystems derart aufnimmt, dass die Endabschnitte der Rohrstücke aus dem Wärmeübertragungselement herausragen.

Die Erfindung betrifft auch eine Klimatisierungsanordnung für einen Schaltschrank, insbesondere zur Verwendung mit einem Schaltschrank.

Die Erfindung betrifft ferner einen Schaltschrank mit einem Gehäuse, das eine Vielzahl elektronischer Komponenten aufnimmt.

### Technologischer Hintergrund

Ein Schaltschrank der hier angesprochenen Art nimmt eine Vielzahl von elektronischen Komponenten auf, die zur Steuerung einer verfahrenstechnischen Anlage, einer Werkzeugmaschine oder einer sonstigen Fertigungseinrichtung ausgebildet sind. Zu den typischerweise verbauten elektronischen Komponenten zählen insbesondere Stromleitungen, Klemmen, Widerstände, Kondensatoren, Dioden, Transistoren, Induktivitäten, integrierte Schaltkreise, Relais, Sensoren und vieles mehr. Beim bestimmungsgemäßen Betrieb eines solchen Schaltschranks entsteht Wärme, die zur Aufrechterhaltung der dauerhaften Funktionsfähigkeit der elektrischen Komponenten effektiv abzuführen ist. Hierfür ist in einem herkömmlichen Schaltschrank ein gattungsgemäßer Wärmetauscher mit einem Rohrleitungssystem und/oder eine Klimatisierungsanordnung mit einem solchen Wärmetauscher verbaut, wobei das Rohrleitungssystem zur Leitung eines Kältemittels ausgebildet ist und mehrere Rohrstücke sowie mehrere Rohrbögen besitzt, wobei die Rohrbögen jeweils zwei Endabschnitte zweier Rohrstücke fluidleitend miteinander verbinden. Insofern bildet das Rohrleitungssystem eine Rohrschlange, in der ein Kältemittel zirkuliert, das innerhalb des Schaltschranks Wärme aufnimmt und die Wärme außerhalb des Schaltschranks abführt. Zur effektiven Wärmeabfuhr wird in einem Innenkreis bzw. im Innenraum des Schaltschranks eine Luftströmung erzeugt, die den Wärmetauscher beaufschlagt. Dieser Innenkreis bzw. der Innenbereich des Schaltschranks ist von der Umgebung bzw. einem Außenkreis abgeschirmt, sodass keine Gase in das Innere des Schaltschranks gelangen können.

Als Kältemittel sind nach dem Stand der Technik insbesondere fluorierte Treibhausgase bekannt, die in Bezug auf die Wärmeabfuhr zwar aus thermodynamischen Gründen vorteilhaft sind, allerdings im Leckagefall an die Umwelt abgegeben werden, was mit negativen Auswirkungen auf das Klima verbunden ist. Besonders leckageanfällige Bereiche eines solchen Rohrleitungssystems sind Rohrbögen, die eine Krümmung von mehr als 90° aufweisen, und Verbindungsstellen, insbesondere Lötstellen, zwischen den Rohrbögen und den Rohrstücken. Die Verwendung von fluorierten Kältemitteln ist daher auf absehbare Zeit einzustellen, weshalb zukünftig auf alternative Kältemittel zurückgegriffen werden muss.

Alternative Kältemittel, die aus thermodynamischen Gründen in sinnvoller Weise verwendbar sind, sind in der Regel brennbar bzw. hoch entflammbar oder weisen hohe Betriebsdrücke bei transkritischem Betrieb auf. Um derartige Kältemittel in der Schaltschrankklimatisierung sicher und richtlinienkonform einsetzen zu können, ist eine sichere Ausgestaltung, insbesondere des Innenkreises des Schaltschranks notwendig. Hierbei muss auch im Leckagefall sichergestellt werden, dass durch austretendes Kältemittel, insbesondere im Bereich des Verdampfers, keine explosive Atmosphäre entsteht, weil diese durch ein elektronisches Bauteil im Schaltschrank gezündet werden könnte.

### Darstellung der Erfindung: Aufgabe, Lösung, Vorteile

Hiervon ausgehend ist es die Aufgabe der Erfindung einen Wärmetauscher, eine Klimatisierungsanordnung und einen Schaltschrank anzugeben, die einen explosionssicheren Betrieb des Wärmetauschers mit einem brennbaren bzw. hoch entflammbaren Kältemittel oder mit einem Kältemittel erlauben

Diese Aufgabe wird zunächst durch einen Wärmetauscher, insbesondere einen Wärmetauscher zur Schaltschrankklimatisierung, mit einem Rohrleitungssystem gelöst, das zur Leitung eines Kältemittels ausgebildet ist und mehrere Rohrstücke sowie mindestens ein Rohrstückverbindungselement umfasst, wobei das mindestens eine Rohrstückverbindungselement zwei oder mehr Endabschnitte der Rohrstücke fluidleitend miteinander verbindet, und mit einem Wärmeübertragungselement, das vorzugsweise als Rippenanordnung mit einer Vielzahl von Rippen bzw. Lamellen ausgebildet ist, wobei das Wärmeübertragungselement die Rohrstücke des Rohrleitungssystems derart aufnimmt, dass die Endabschnitte der Rohrstücke aus dem Wärmeübertragungselement herausragen, wobei mindestens eine Kapsel vorgesehen ist, wobei Endabschnitte der Rohrstücke des Rohrleitungssystems in die mindestens eine Kapsel münden, sodass das mindestens eine Rohrstückverbindungselement innerhalb der mindestens einen Kapsel angeordnet ist.

Die mindestens eine Kapsel bildet einen, insbesondere vom Innenkreis bzw. von einem Innenbereich des Schaltschranks, abgekapselten Bereich, derart, dass in der Kapsel enthaltene Gase nicht in das Innere des Schaltschranks gelangen können. Hierfür umfasst die mindestens eine Kapsel bevorzugt ein Gehäuse, insbesondere ein gesondertes und/oder, insbesondere in sich, geschlossenes Gehäuse, und/oder ist als ein solches Gehäuses ausgebildet. Insofern gelangt selbst im Leckagefall im Bereich eines leckageanfälligen Rohrverbindungselementes kein Kältemittel in den Innenkreis bzw. den Innenbereich des Schaltschranks, in dem die elektrischen und/oder elektronischen Komponenten des Schaltschranks angeordnet sind, sodass ein solcher Wärmetauscher auch mit einem brennbaren bzw. hoch entflammbaren Kältemittel betrieben werden kann.

Vorteilhafte Weiterbildungen der vorliegenden Erfindung werden nachfolgend und in den Unteransprüchen angegeben.

Nach einer vorteilhaften Weiterbildung der Erfindung sind zwei Kapseln vorgesehen, zwischen denen das Wärmeübertragungselement angeordnet ist, wobei die Endabschnitte der Rohrstücke des Rohrleitungssystems in jeweils eine der Kapseln münden, wobei in jeder der zwei Kapseln mindestens ein Rohrstückverbindungselement angeordnet ist. Das mindestens eine Rohrstückverbindungselement ist ausgebildet und/oder eingerichtet, um ein kältemittelzuführendes Rohrstück mit einem kältemittelabführenden Rohrstück fluidleitend zu verbinden. Ein solches Rohrstückverbindungselement kann beispielsweise mindestens ein oder mehrere Sammelelemente bzw. Manifolds umfassen. In ein solches Sammelelement münden mehrere Rohrstücke, insbesondere zwei Rohrstücke. Ein solches Sammelelement besitzt mindestens einen Zulauf und mindestens einen Ablauf und ist dazu eingerichtet, ein kältemittelzuführendes Rohrstück mit einem kältemittelabführenden Rohrstück fluidleitend zu verbinden. Ein solches Sammelelement kann vorzugsweise ein oder mehrere Gehäuse oder ein oder mehrere, insbesondere gerade, Rohrelemente umfassen. Alternativ ist vorgesehen, dass das mindestens eine Rohrstückverbindungselement ein oder mehrere Rohrbögen umfasst, wobei die Rohrbögen jeweils zwei Endabschnitte zweier Rohrstücke fluidleitend miteinander verbinden.

Nach einer vorteilhaften Weiterbildung der Erfindung ist vorgesehen, dass die Rohrstücke und das mindestens eine Rohrstückverbindungselement über Verbindungsstellen stoffschlüssig miteinander verbunden sind, wobei die Verbindungsstellen zweckmäßigerweise jeweils innerhalb einer der Kapseln angeordnet sind. Eine stoffschlüssige Verbindung ist insbesondere eine gelötete Verbindung. Durch die Anordnung der Verbindungsstelle innerhalb einer der Kapseln sind alle leckageanfälligen Bereiche des Rohrleitungssystems vom Innenkreis des Schaltschranks derart abgeschirmt, dass ein Gasaustausch verhindert ist, sodass der Wärmetauscher sicher und richtlinienkonform einsetzbar ist.

Außerhalb der Kapseln besitzt das Rohrleitungssystem vorzugsweise keine leckageanfälligen Bereiche.

Nach einer vorteilhaften Weiterbildung der Erfindung ist vorgesehen, dass die Rohrstücke in Bezug auf ihre jeweilige Längsachse eine Krümmung aufweisen, die bevorzugt kleiner-gleich 90°, besonders bevorzugt kleiner-gleich 45°, ist. Alternativ ist es bevorzugt, dass die Rohrstücke in Bezug auf ihre jeweilige Längsachse krümmungsfrei sind. Hierdurch wird auch die Montage innerhalb des Wärmeübertragungselements und/oder die Vorsehung aller leckageanfälliger Bereiche innerhalb der mindestens einen Kapsel vereinfacht.

Die Rohrbögen weisen vorzugsweise eine Biegung zwischen 170° bis 190°, bevorzugt im Wesentlichen 180°, besonders bevorzugt 180°, auf. Eine solche Biegung erlaubt, dass die Rohrstücke innerhalb des Wärmeübertragungselements vorzugsweise parallel zueinander angeordnet sein können. Damit weisen die Rohrbögen vorzugsweise eine Biegung von 180° auf, was insbesondere in Kombination die Montage des Wärmestauschers vereinfacht.

Zur Aufrechterhaltung eines Kühlmittelkreislaufs ist, insbesondere außerhalb des Schaltschranks und ferner insbesondere innerhalb einer dem Schaltschrank zugeordneten Klimatisierungsanordnung, ein Kältemittelverdichter angeordnet. Zur Verbindung des Rohrleitungssystems mit dem Kältemittelverdichter der Kältemittelpumpe ist vorzugsweise vorgesehen, dass ein erstes Rohrstück mit einem Kältemittelzulauf und ein zweites Rohrstück mit einem Kältemittelablauf verbunden ist. Der Kältemittelzulauf und -ablauf sind vorzugsweise Teil des Kühlmittelkreislaufs.

Der Wärmetauscher weist vorzugsweise ein Kältemittel auf, wobei das Kältemittel vorzugsweise brennbar und/oder explosionsgefährdet ist. Insbesondere ist vorgesehen, dass das Kältemittel Propan, Butan, Isobutan oder Propen ist oder enthält, was sich von den alternativ zur Verfügung stehenden Kältemitteln als besonders effektiv erwiesen hat.

Das Rohrleitungssystem des Wärmetauschers kann insbesondere außerhalb der Kapseln, vorzugsweise in einem Abschnitt zwischen zwei Kapseln, einwandig oder doppelwandig ausgebildet sein. Bei einer vollständig einwandigen Ausgestaltung des Rohrleitungssystems außerhalb der Kapseln ist vorzugsweise vorgesehen, dass die Rippen des Wärmeübertragungselements zur Wärmeübertragung unmittelbar mit den Rohrstücken verbunden sind. Das bedeutet, dass die Rippen an den Rohrstücken anliegen und/oder stoffschlüssig mit den Rohrstücken verbunden sind, was die Wärmeleitfähigkeit der Verbindungsstelle erhöht und somit die Wärmeabfuhr begünstigt. Hierbei ist die mindestens eine Kapsel vorzugsweise mit einem Fluid, vorzugsweise mit einem Gas, besonders bevorzugt mit Luft, oder mit einer Flüssigkeit, vorzugsweise mit Wasser, gefüllt. Die mindestens eine Kapsel ist dabei vorzugsweise fluiddicht ausgebildet, damit das hierin enthaltene Fluid nicht aus der Kapsel entweicht.

Damit der Schaltschrank im Leckagefall des Rohrleitungssystems unmittelbar nach bzw. bei Auftreten der Leckage spannungsfrei ausgeschaltet werden kann oder automatisiert spannungsfrei geschaltet wird, ist nach einer vorteilhaften Weiterbildung vorgesehen, dass die mindestens eine Kapsel eine Leckagedetektion bzw. Leckagedetektionseinrichtung aufweist, wobei die Leckagedetektion zur Detektion einer Leckage des Kältemittels eingerichtet ist. Vorzugsweise weist die Leckagedetektion einen Druckschalter und/oder einen Drucksensor und/oder einen Fluidsensor, insbesondere einen Flüssigkeitssensor und/oder einen Gassensor, auf. Sind mindestens zwei Kapseln vorgesehen, kann jede Kapsel eine Leckagedetektion aufweisen oder auch nur eine der Kapseln. Sind mehrere Kapseln vorgesehen, ist vorzugsweise in jeder Kapsel eine Leckagedetektion vorgesehen. Dies ist insbesondere bei einer einwandigen Ausbildung der Rohrstücke bevorzugt. Die Druck- oder Fluidsensoren der Leckagedetektion wirken derart mit den fluidgefüllten Kapseln zusammen, dass bei der Detektion eines Druckanstiegs oder Druckabfalls oder bei einer Fluiddetektion der Schaltschrank automatisiert spannungsfrei geschaltet wird.

Bei einer Ausgestaltung des Rohrleistungssystems des Wärmetauschers, das außerhalb der Kapseln, vorzugsweise in einem Abschnitt zwischen zwei Kapseln, doppelwandig ausgebildet ist, ist vorgesehen, dass die Rohrstücke jeweils von einem Außenrohr derart umgriffen bzw. umschlossen sind, dass zwischen den Rohrstücken und den zugeordneten Außenrohren ein Ringkanal ausgebildet ist, der zur Leitung einer Flüssigkeit, insbesondere eines Thermofluids, ausgebildet ist. Ein Thermofluid bzw. eine Temperierflüssigkeit ist dabei ein Medium, das bei Temperaturen, die bei der bestimmungsgemäßen Verwendung des Wärmetauschers typischerweise herrschen, flüssig ist und eine vergleichsweise hohe Wärmeleitfähigkeit besitzt. Insofern sind solche Thermofluide besonders geeignet, um Wärme effektiv über die Rippen und das Thermofluid auf das Kältemittel zu übertragen. Als Thermofluid ist insbesondere ein Thermoöl verwendbar. Dabei sind die Rohrstücke und die zugeordneten Außenrohre vorzugsweise koaxial zueinander angeordnet. Die Außenrohre weisen Endabschnitte auf, die vorzugsweise in je eine der Kapseln münden, sodass die Kapseln über die Ringkanäle fluidführend miteinander verbunden sind. Bevorzugt umgreift das Außenrohr das jeweilige Rohrstück mindestens auf einer Länge von 80 % der Gesamtlänge des jeweiligen Rohrstücks, besonders bevorzugt mindestens 90 % der Gesamtlänge des jeweiligen Rohrstücks, ganz besonders bevorzugt im Wesentlichen über die gesamte Länge des Rohrstücks.

Zur koaxialen Ausrichtung und zur lagestabilen Montage der Rohrstücke und der jeweils zugeordneten Außenrohre ist vorgesehen, dass die Rohrstücke mit den zugeordneten Außenrohren über Distanzstücke, insbesondere über Distanzscheiben, miteinander verbunden sind, wobei die Außenrohre vorzugsweise Ausnehmungen, insbesondere Bohrungen, aufweisen, über die die Ringkanäle fluidführend mit den Kapseln verbunden sind. Die Distanzstücke sind ringförmige Befestigungselemente, die zunächst auf die Rohrstücke aufgeschoben sind und diese umgreifen bzw. ummanteln. Im montierten Zustand sind die Außenrohre zumindest abschnittsweise auf die Distanzstücke aufgesteckt, sodass sich eine koaxiale und lagestabile Ausrichtung zwischen je einem Rohrstück und einem hierzu koaxial gelagerten Außenrohr ergibt. Durch die hydraulische Verbindung zwischen den Kapseln reicht es bei einer solchen Ausführungsform des Wärmetauschers aus, dass mindestens eine der Kapseln eine Leckagedetektion aufweist, wobei die Leckagedetektion vorzugsweise einen Druckschalter und/oder einen Drucksensor und/oder einen Flüssigkeitssensor besitzt. Bei einem signifikanten Druckabfall kann von einer Leckage des Thermofluids über die äußere Wandung der Kapseln und/oder der Außenrohre ausgegangen werden. Bei einer deutlichen Druckerhöhung kann von einer Leckage des Rohrleitungssystems und damit von einem Austritt des Kältemittels in das Thermofluid ausgegangen werden. Eine Leckagedetektion des Thermofluids kann auch über einen Flüssigkeitssensor außerhalb des gekapselten Bereiches erfolgen. Zur Wärmeübertragung ist vorgesehen, dass die Rippen des Wärmeübertragungselements unmittelbar mit den Außenrohren verbunden sind, sodass die Wärme von den Rippen auf das Thermofluid und vom Thermofluid auf das Kältemittel übertragen wird.

Unabhängig von der konkreten Ausführungsform des Wärmetauschers kann dieser als Verdampfer einer Kompressionskältemaschine ausgebildet sein. Eine Kompressionskältemaschine ist eine Kältemaschine, die den physikalischen Effekt der Enthalpiedifferenzerhöhung bei einem Wechsel des Aggregatzustandes eines Kältemittels, beispielsweise von flüssig zu gasförmig, nutzt. Das zirkulierende Kältemittel erfährt nacheinander verschiedene Aggregatzustandsänderungen. Dabei wird ausgenutzt, dass sich die Kondensations- und die Siedetemperatur des Kältemittels abhängig von seinem Druck verändert. Das gasförmige Kältemittel wird zunächst mittels eines Kompressor komprimiert, wobei die Siedetemperatur und der Druck steigen. In einem nachgeschalteten Verflüssiger kondensiert es unter Wärmeabgabe. Anschließend wird das flüssige Kältemittel über eine Drossel entspannt, wobei die Siedetemperatur sinkt. Im nachgeschalteten Verdampfer verdampft das Kältemittel unter Wärmeaufnahme bei niedriger Temperatur, womit der Kreislauf geschlossen ist.

Die eingangs genannte Aufgabe wird auch durch eine Klimatisierungsanordnung für einen Schaltschrank, insbesondere zur Verwendung mit einem Schaltschrank gelöst, wobei die Klimatisierungsanordnung ein Gehäuse aufweist, welches einen schaltschrankseitigen Gehäusebereich und einen außenseitigen Gehäusebereich sowie eine zwischen dem schaltschrankseitigen Gehäusebereich und dem außenseitigen Gehäusebereich angeordnete Trennwand aufweist, welche den schaltschrankseitigen Gehäusebereich und den außenseitigen Gehäusebereich fluidisch voneinander trennen, wobei die Klimatisierungsanordnung ferner einen vorbeschriebenen Wärmetauscher umfasst, wobei der Wärmetauscher, insbesondere vollständig, im schaltschrankseitigen Gehäusebereich angeordnet ist.

Vorzugsweise ist vorgesehen, dass der Wärmetauscher als Verdampfer einer Kompressionskältemaschine ausgebildet ist, die einen Kompressor, einen Kondensator und eine Drossel umfasst, wobei der Kompressor, der Kondensator und die Drossel in dem außenseitigen Gehäusebereich der Klimatisierungsanordnung angeordnet sind. Damit zwischen dem Wärmetauscher, der im schaltschrankseitigen Gehäusebereich angeordnet ist, und dem Kompressor, dem Kondensator und der Drossel der Kompressionskältemaschine ein fluidleitender Kühlmittelkreislauf entsteht, ist vorgesehen, dass der Kältemittelzulauf und der Kältemittelablauf vorzugsweise die Trennwand durchgreifen. Dabei ist nach einer besonders vorteilhaften Weiterbildung vorgesehen, dass die mindestens eine Kapsel bereichsweise an der Trennwand anliegt und/oder bereichsweise die Trennwand bildet.

Insgesamt ergibt sich hierdurch eine Klimatisierungsanordnung mit einem kompakten Gehäuse, das alle Komponenten aufnimmt, die für eine effektive Klimatisierung eines Schaltschranks erforderlich sind. Ferner lässt sich eine solche Klimatisierungsanordnung in besonders einfacher Weise an einen Schaltschrank montieren. Ferner erlaubt die Klimatisierungsanordnung einen explosionssicheren Betrieb des Wärmetauschers mit einem brennbaren bzw. hoch entflammbaren Kältemittel. Ein weiterer Vorteil der Klimatisierungsanordnung besteht darin, dass diese eine integrierte Leckageerkennung aufweisen kann.

Die eingangs genannte Aufgabe wird zudem auch durch einen Schaltschrank mit einem Gehäuse gelöst, das eine Vielzahl elektronischer Komponenten aufnimmt, wobei der Schaltschrank einen solchen Wärmetauscher und/oder eine solche Klimatisierungsanordnung aufweist.

### Kurze Beschreibung der Figuren

Eine konkrete Ausführungsform der Erfindung wird nachfolgend mit Bezug auf die Figuren erläutert. Es zeigen:
- Fig. 1a: eine Querschnittsansicht einer ersten Ausführungsform eines Wärmetauschers;
- Fig. 1b: eine perspektivische Ansicht der ersten Ausführungsform eines Wärmetauschers;
- Fig. 2a: eine Querschnittsansicht einer zweiten Ausführungsform eines Wärmetauschers;
- Fig. 2b: eine erste Detailansicht der zweiten Ausführungsform des Wärmetauschers;
- Fig. 2c: eine zweite Detailansicht der zweiten Ausführungsform des Wärmetauschers;
- Fig. 2d: eine Querschnittsansicht der zweiten Ausführungsform des Wärmetauschers entlang der Querschnittsebene A-A; und
- Fig. 3: einen Schaltschrank mit Klimatisierungsanordnung.

### Ausführliche Beschreibung der Figuren

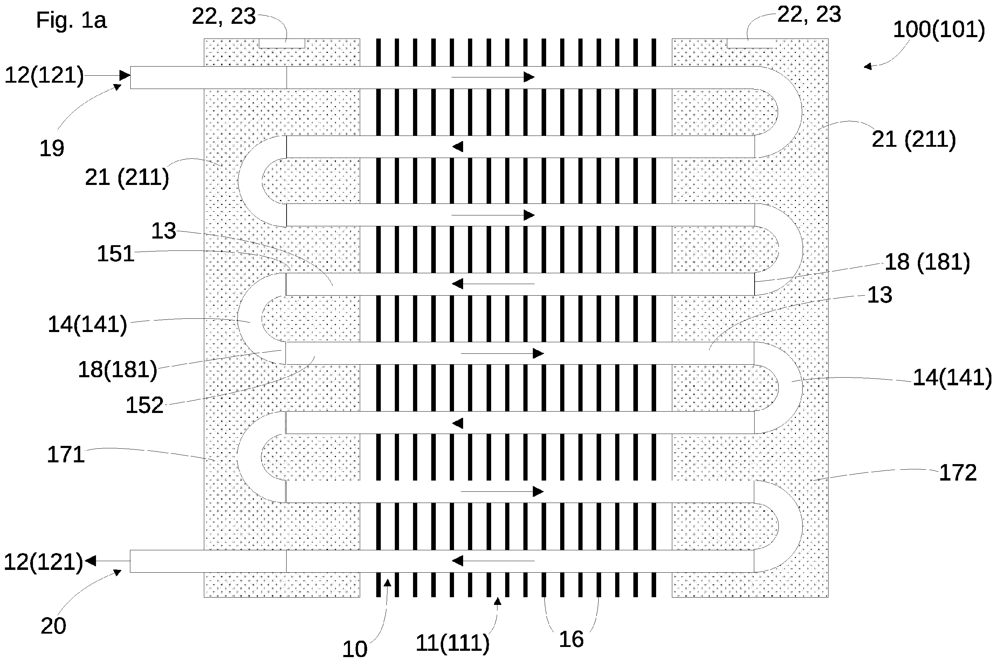

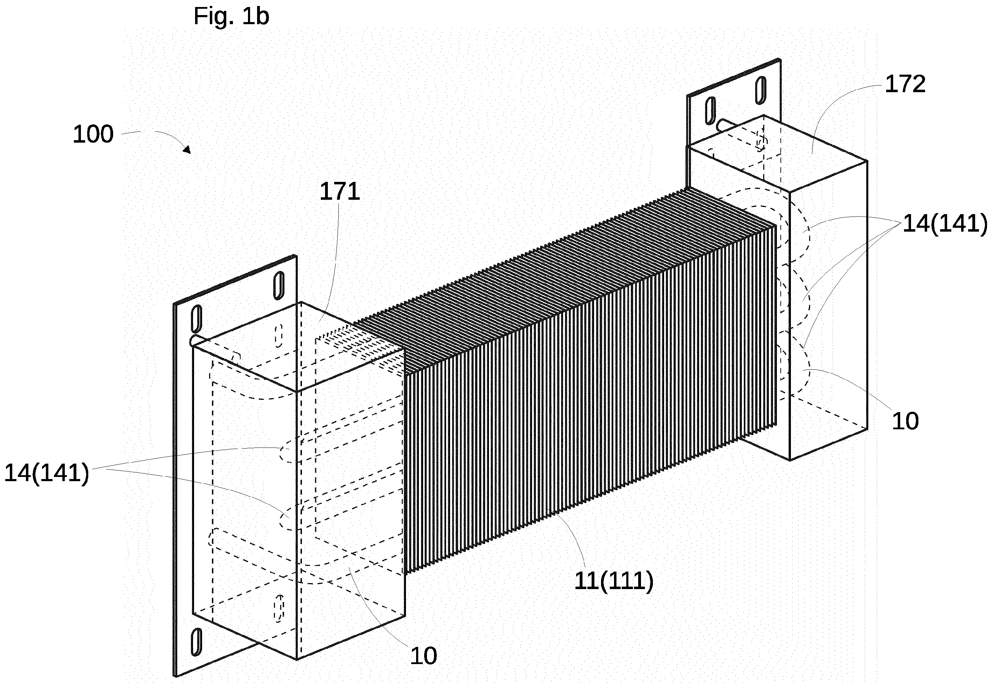

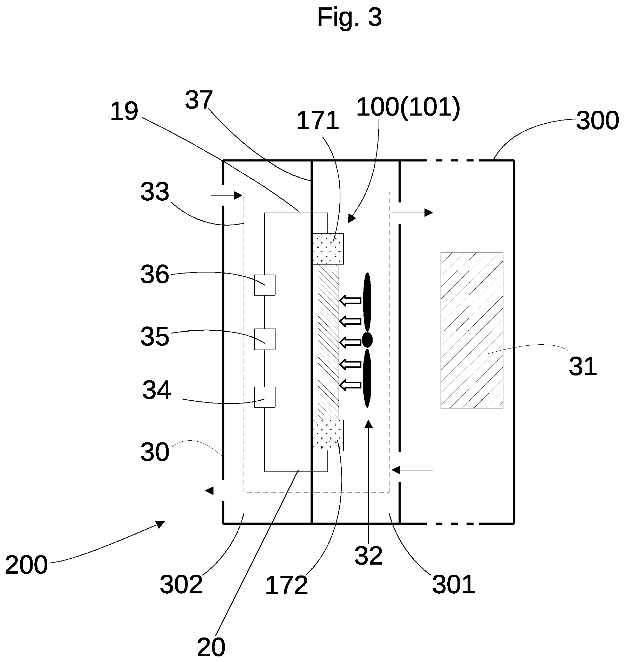

Fig. 1a zeigt eine Querschnittsansicht eines ersten Wärmetauschers 100, der als Teil einer Klimatisierungsanordnung 200 zur Klimatisierung eines Schaltschranks 300 ausgebildet ist (Fig. 3). Fig. 1b zeigt eine perspektivische Ansicht dieses Wärmetauschers 100.

Der Wärmetauscher 100 weist ein Rohrleitungssystem 10 und ein Wärmeübertragungselement 11 auf. Das Rohrleitungssystem 10 ist zur Leitung eines Kältemittels 12 ausgebildet und besitzt mehrere Rohrstücke 13 sowie mehrere Rohrstückverbindungselemente 14 in Form mehrerer Rohrbögen 141. Das Kältemittel 12 ist brennbar. Insbesondere ist oder enthält das Kältemittel Propan 121. Die Rohrbögen 141 verbinden jeweils zwei Endabschnitte 151, 152 zweier Rohrstücke 13 fluidleitend. Das Wärmeübertragungselement 11 ist als Rippenanordnung 111 ausgebildet und besitzt eine Vielzahl von Rippen 16 bzw. Lamellen. Das Wärmeübertragungselement 11 nimmt die Rohrstücke 13 des Rohrleitungssystems 10 derart auf, dass die Endabschnitte 151, 152 der Rohrstücke 13 aus dem Wärmeübertragungselement 11 herausragen. Der Wärmetauscher 100 besitzt zwei Kapseln 171, 172, die das Wärmeübertragungselement 11 links- und rechtsseitig flankieren und jeweils als ein gesondertes und geschlossenes Gehäuse ausgebildet sind und damit einen, insbesondere vom Innenkreis bzw. vom Innenbereich des Schaltschranks 300, abgekapselten Bereich bilden, sodass hierin enthaltene Gase nicht in das Innere des Schaltschranks 300 gelangen können. Die Endabschnitte 151, 152 der Rohrstücke 13 des Rohrleitungssystems 10, die mit einem Rohrbogen 141 verbunden sind, münden in jeweils eine der Kapseln 171, 172, sodass die Rohrbögen 141 innerhalb der Kapseln 171, 172 angeordnet sind. Die Rohrstücke 13 und die Rohrbögen 141 sind über Verbindungsstellen 18 stoffschlüssig miteinander verbunden, wobei die Verbindungsstellen 18 jeweils innerhalb einer der Kapseln 171, 172 angeordnet sind. Die Verbindungsstellen 18 sind im dargestellten Ausführungsbeispiel als Lötstellen 181 ausgebildet. Die Rohrstücke 13 sind in Bezug auf ihre jeweilige Längsachse gerade und damit krümmungsfrei ausgestaltet. Die Rohrbögen 141 weisen eine Biegung von 180° auf, sodass die Rohrstücke 13 innerhalb des Wärmeübertragungselements 11 parallel zueinander ausgerichtet sind. Ein erstes Rohrstück 13 ist unmittelbar mit einem Kältemittelzulauf 19 und ein zweites Rohrstück 13 ist unmittelbar mit einem Kältemittelablauf 20 verbunden, wobei das Kältemittel 12 im gezeigten Ausführungsbeispiel Propan 121 ist. Zwischen dem Kältemittelzulauf 19 und dem Kältemittelablauf 20 bildet das Rohrleitungssystem 10 eine mäandrierende Rohrschlange, die mehrfach das Wärmeübertragungselement 11 zwischen der linksseitigen Kapsel 171 und der rechtsseitigen Kapsel 172 durchgreift.

Die Fig. 1a, b zeigen einen Wärmetauscher 100, dessen Rohrleitungssystem 10 im Bereich des Wärmeübertragungselements 11 einwandig ausgebildet ist. Dabei sind die Rippen 16 des Wärmeübertragungselements 11 zur Wärmeübertragung unmittelbar mit den Rohrstücken 13 verbunden. Die Kapseln 171, 172, die alle leckageanfälligen Abschnitte des Rohrleitungssystems 10 aufnehmen, sind mit einem Gas 21 gefüllt und gasdicht ausgebildet. Das Gas 21 ist im dargestellten Ausführungsbeispiel Luft 211. Jede Kapsel 171, 172 weist eine Leckagedetektion 22 auf, wobei die Leckagedetektion 22 einen Drucksensor 23 besitzt. Steigt der Druck innerhalb einer der Kapseln 171, 172 über einen vorgegebenen Wert, kann eine Leckage vorliegen, sodass der Schaltschrank 200 mittels einer Notausschaltung spannungsfrei geschaltet wird.

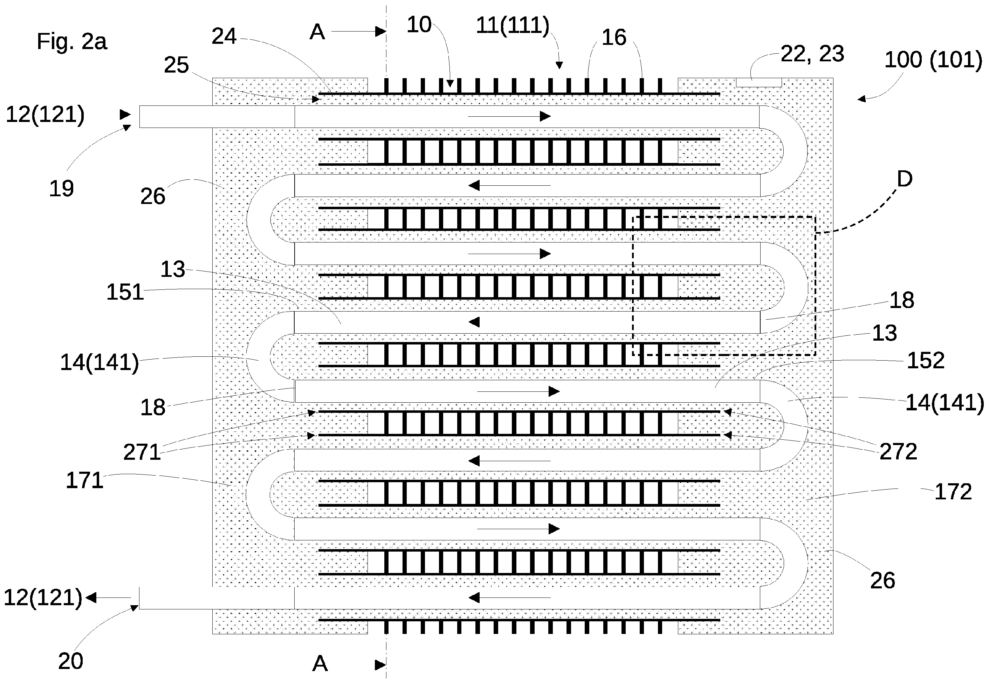

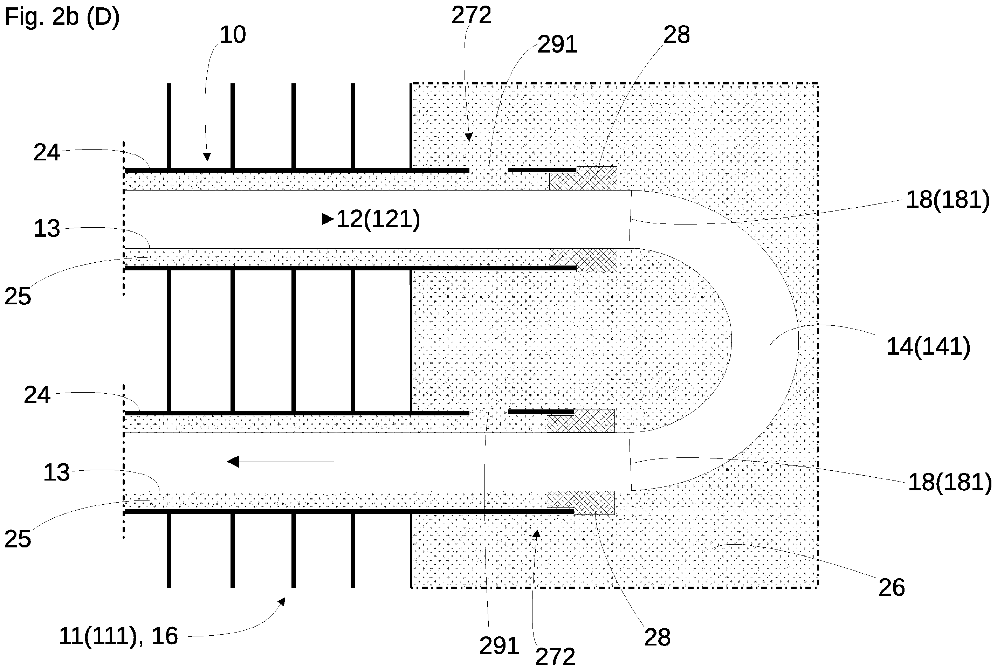

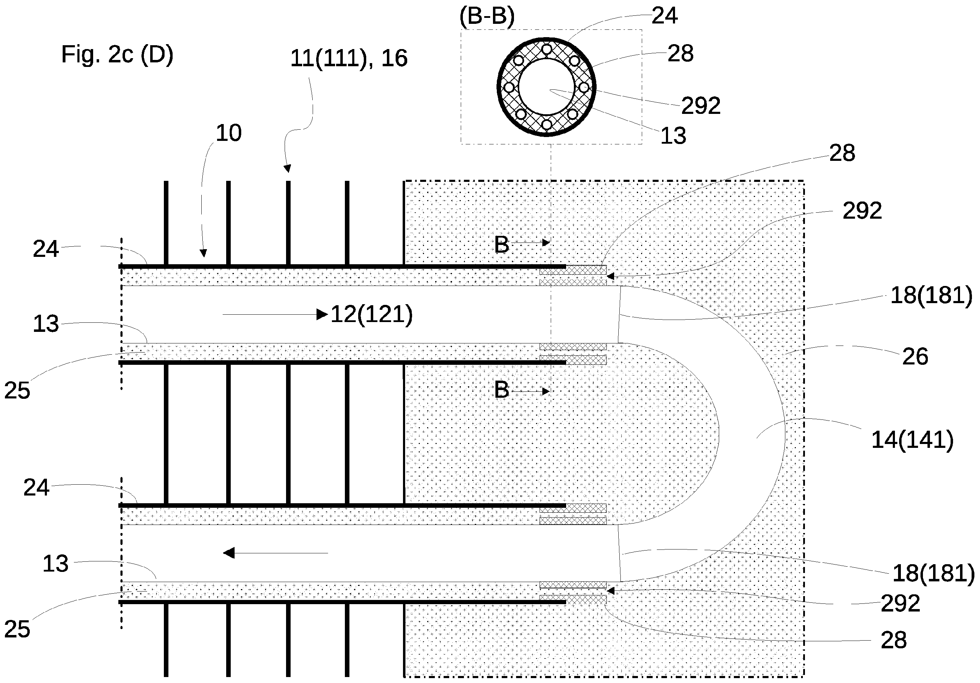

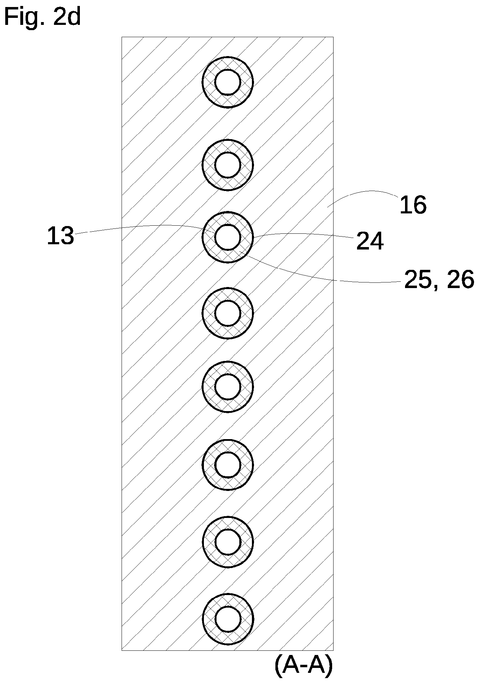

Die Fig. 2a-d zeigen einen zweiten Wärmetauscher 100, der ebenfalls zur Klimatisierung des Schaltschranks 200 ausgebildet ist. Die Rohrstücke 13 sind jeweils von einem Außenrohr 24 derart umgriffen, dass zwischen den Rohrstücken 13 und den zugeordneten Außenrohren 24 ein Ringkanal 25 ausgebildet ist, der zur Leitung eines Thermofluids 26 ausgebildet ist. Die Rohrstücke 13 und die zugeordneten Außenrohre 24 sind koaxial zueinander angeordnet (Fig. 2d). Die Außenrohre 24 weisen Endabschnitte 271, 272 auf, die in je eine der Kapseln 171, 172 münden, sodass die Kapseln 171, 172 über die Ringkanäle 25 fluidführend miteinander verbunden sind. Die Rohrstücke 13 sind mit den zugeordneten Außenrohren 24 über Distanzstücke 28 miteinander verbunden, wobei Ausnehmungen 291, 292 vorgesehen sind, sodass die Ringkanäle 25 fluidführend mit den Kapseln 171, 172 verbunden sind (Fig. 2b, c). Bei der Ausführungsform nach Fig. 2b sind die Ausnehmungen 291 in die Mantelfläche der Außenrohre 24 eingebracht. Dabei können eine oder mehrere Ausnehmungen 291 eingebracht sein. Bei der Ausführungsform nach Fig. 2c sind die Ausnehmungen 292 demgegenüber längsaxial innerhalb der Distanzstücke 28 eingebracht. Die Detailansicht der Fig. 2c zeigt eine Querschnittsansicht des Außenrohrs 24 im Bereich des Distanzstückes 28. Bei diesem Ausführungsbeispiel sind 8 Ausnehmungen 292 äquiangular innerhalb des Distanzstückes angeordnet. Im Rahmen einer nicht gezeigten Ausführungsform können auch beide Arten von Ausnehmungen 291, 292 vorgesehen sein. Unabhängig von der konkreten Ausgestaltung der Ausnehmungen 291, 292 reicht es für die Detektion einer Leckage hierdurch aus, dass nur eine der Kapseln 171, 172 eine Leckagedetektion 22 besitzt, wobei die dargestellte Leckagedetektion 22 einen Drucksensor 23 besitzt. Die Rippen 16 des Wärmeübertragungselements 11 sind zur Wärmeübertragung unmittelbar mit den Außenrohren 24 verbunden, sodass die im Schaltschrank 300 aufgenommene Wärme zunächst an das Thermofluid 26 und anschließend an das Kältemittel 12 abgegeben wird.

Fig. 3 zeigt eine Klimatisierungsanordnung 200, die zum Wärmeaustausch von einem Schaltschrank 300 aufgenommen bzw. an dem Schaltschrank 300 befestigt ist, der eine Vielzahl elektronischer Komponenten 31 aufnimmt. Die Klimatisierungsanordnung 200 weist ein Gehäuse 30 auf, welches einen schaltschrankseitigen Gehäusebereich 301 und einen außenseitigen Gehäusebereich 302 sowie eine zwischen dem schaltschrankseitigen Gehäusebereich 301 und dem außenseitigen Gehäusebereich 302 angeordnete Trennwand 37 aufweist, welche den schaltschrankseitigen Gehäusebereich 301 und den außenseitigen Gehäusebereich 302 fluidisch voneinander trennt. Dabei umfasst die Klimatisierungsanordnung 200 ferner einen Wärmetauscher 100, der vollständig im schaltschrankseitigen Gehäusebereich 301 angeordnet ist. Der Wärmetauscher 100 ist als Verdampfer 101 einer Kompressionskältemaschine 33 ausgebildet, die einen Kompressor 34, einen Kondensator 35 und eine Drossel 36 umfasst, wobei der Kompressor 34, der Kondensator 35 und die Drossel 36 in dem außenseitigen Gehäusebereich 302 der Klimatisierungsanordnung 200 angeordnet sind. Der Kältemittelzulauf 19 und der Kältemittelablauf 20 des Wärmetauschers 100 durchgreifen die Trennwand 37. Dabei liegen die Kapseln 171, 172 bereichsweise an der Trennwand 37 an. Der Wärmetauscher 100 ist mittels eines Ventilators 32 zwangsbelüftet.

### Bezugszeichenliste

- 100: Wärmetauscher
- 200: Klimatisierungsanordnung
- 300: Schaltschrank

- 10: Rohrleitungssystem
- 11: Wärmeübertragungselement
- 111: Rippenanordnung
- 12: Kältemittel
- 121: Propan
- 13: Rohrstück
- 14: Rohrstückverbindungselement
- 141: Rohrbogen
- 151: Endabschnitt
- 152: Endabschnitt
- 16: Rippe
- 171: Kapsel
- 172: Kapsel
- 18: Verbindungsstellen
- 181: Lötstelle
- 19: Kältemittelzulauf

- 20: Kältemittelablauf
- 21: Gas
- 211: Luft
- 22: Leckagedetektion
- 23: Drucksensor
- 24: Außenrohr
- 25: Ringkanal
- 26: Thermofluid
- 271: Endabschnitt
- 272: Endabschnitt
- 28: Distanzstück
- 291: Ausnehmung
- 292: Ausnehmung

- 30: Gehäuse
- 301: schaltschrankseitiger Gehäusebereich
- 302: außenseitiger Gehäusebereich
- 31: elektronische Komponenten
- 32: Ventilator
- 33: Kompressionskältemaschine
- 34: Kompressor
- 35: Kondensator
- 36: Drossel
- 37: Trennwand

- 101: Verdampfer

## Patentansprüche

1. Wärmetauscher (100), insbesondere Wärmetauscher (100) zur Schaltschrancklimatisierung, mit einem Rohrleitungssystem (10), das zur Leitung eines Kältemittels (12) ausgebildet ist und mehrere Rohrstücke (13) sowie mindestens ein Rohrstückverbindungselement (14) umfasst, wobei das mindestens eine Rohrstückverbindungselement (14) zwei oder mehr Endabschnitte (151, 152) der Rohrstücke (13) fluidleitend miteinander verbindet, und mit einem Wärmeübertragungselement (11), das vorzugsweise als Rippenanordnung (111) mit einer Vielzahl von Rippen (16) ausgebildet ist, wobei das Wärmeübertragungselement (11) die Rohrstücke (13) des Rohrleitungssystems (10) derart aufnimmt, dass die Endabschnitte (151, 152) der Rohrstücke (13) aus dem Wärmeübertragungselement (11) herausragen, **gekennzeichnet durch** mindestens eine Kapsel (171, 172), wobei Endabschnitte (151, 152) der Rohrstücke (13) des Rohrleitungssystems (10) in die mindestens eine Kapsel (171, 172) münden, sodass das mindestens eine Rohrstückverbindungselement (14) innerhalb der mindestens einen Kapsel (171, 172) angeordnet ist.

2. Wärmetauscher (100) nach Anspruch 1, wobei zwei Kapseln (171, 172), zwischen denen das Wärmeübertragungselement (11) angeordnet ist, vorgesehen sind, wobei die Endabschnitte (151, 152) der Rohrstücke (13) des Rohrleitungssystems (10) in jeweils eine der Kapseln (171, 172) münden, wobei in jeder der zwei Kapseln (171, 172) mindestens ein Rohrstückverbindungselement (14) angeordnet ist, und/oder
wobei das mindestens eine Rohrstückverbindungselement (14) mehrere Rohrbögen (141) umfasst, wobei die Rohrbögen (141) jeweils zwei Endabschnitte (151, 152) zweier Rohrstücke (13) fluidleitend miteinander verbinden.

3. Wärmetauscher (100) nach einem der vorhergehenden Ansprüche, wobei die Rohrstücke (13) und das mindestens eine Rohrstückverbindungselement (14) über Verbindungsstellen (18) stoffschlüssig miteinander verbunden sind, wobei die Verbindungsstellen (18) jeweils innerhalb einer der Kapseln (171, 172) angeordnet sind.

4. Wärmetauscher (100) nach einem der vorhergehenden Ansprüche, wobei die Rohrstücke (13) in Bezug auf ihre jeweilige Längsachse eine Krümmung aufweisen, die kleiner-gleich 90°, insbesondere kleiner-gleich 45°, ist.

5. Wärmetauscher (100) nach einem der Ansprüche 1 bis 3, wobei die Rohrstücke (13) in Bezug auf ihre jeweilige Längsachse krümmungsfrei sind.

6. Wärmetauscher (100) nach einem der Ansprüche 2 bis 5, wobei die Rohrbögen (141) eine Biegung zwischen 170° bis 190°, bevorzugt im Wesentlichen 180°, besonders bevorzugt 180°, aufweisen.

7. Wärmetauscher (100) nach einem der vorhergehenden Ansprüche, wobei ein erstes Rohrstück (13) mit einem Kältemittelzulauf (19) und ein zweites Rohrstück (13) mit einem Kältemittelablauf (20) verbunden ist, und/oder wobei das Kältemittel (12) brennbar und/oder explosionsgefährdet ist und/oder dass das Kältemittel Propan (121), Butan, Isobutan oder Propen ist oder enthält.

8. Wärmetauscher (100) nach einem der vorhergehenden Ansprüche, wobei die Rippen (16) des Wärmeübertragungselements (11) zur Wärmeübertragung unmittelbar mit den Rohrstücken (13) verbunden sind,
wobei insbesondere die mindestens eine Kapsel (171, 172) mit einem Fluid, vorzugsweise mit einem Gas (21), besonders bevorzugt mit Luft (211), oder mit einer Flüssigkeit, vorzugsweise mit Wasser, gefüllt ist,
und wobei insbesondere die mindestens eine Kapsel (171, 172) fluiddicht und/oder gasdicht ausgebildet ist.

9. Wärmetauscher (100) nach einem der vorhergehenden Ansprüche, wobei mindestens eine der Kapseln (171, 172), insbesondere jede Kapsel (171, 172), eine Leckagedetektion (22) aufweist, wobei die Leckagedetektion (22) vorzugsweise einen Druckschalter und/oder einen Drucksensor (23) und/oder einen Fluidsensor, insbesondere einen Flüssigkeitssensor und/oder einen Gassensor, umfasst.

10. Wärmetauscher (100) nach einem der Ansprüche 1 bis 7, wobei die Rohrstücke (13) jeweils von einem Außenrohr (24) derart umgriffen sind, dass zwischen den Rohrstücken (13) und den zugeordneten Außenrohren (24) ein Ringkanal (25) ausgebildet ist, der zur Leitung einer Flüssigkeit, insbesondere eines Thermofluids (26) ausgebildet ist,
wobei insbesondere die Rohrstücke (13) und die zugeordneten Außenrohre (24) koaxial zueinander angeordnet sind.

11. Wärmetauscher (100) nach Anspruch 10, wobei der Wärmetauscher (100) zwei Kapseln (171, 172) aufweist, wobei die Außenrohre (24) Endabschnitte (271, 272) aufweisen, die in je eine der Kapseln (171, 172) münden, sodass die Kapseln (171, 172) über die Ringkanäle (25) fluidführend miteinander verbunden sind, und/oder
wobei die Rohrstücke (13) mit den zugeordneten Außenrohren (24) über Distanzstücke (28), insbesondere über Distanzscheiben, miteinander verbunden sind, wobei die Außenrohre (24) vorzugsweise Ausnehmungen (29), insbesondere Bohrungen, aufweisen, über die die Ringkanäle (25) fluidführend mit den Kapseln (171, 172) verbunden sind, und/oder
wobei die mindestens eine Kapsel (171, 172) eine Leckagedetektion (22) aufweist, wobei die Leckagedetektion (22) vorzugsweise einen Druckschalter und/oder einen Drucksensor (23) und/oder einen Flüssigkeitssensor und/oder Gassensor umfasst, und/oder
wobei die Rippen (16) des Wärmeübertragungselements (11) zur Wärmeübertragung unmittelbar mit den Außenrohren (24) verbunden sind.

12. Wärmetauscher (100) nach einem der vorhergehenden Ansprüche, wobei der Wärmetauscher (100) als Verdampfer (101) einer Kompressionskältemaschine (33) ausgebildet ist.

13. Klimatisierungsanordnung (200) für einen Schaltschrank (300), insbesondere zur Verwendung mit einem Schaltschrank (300), **dadurch gekennzeichnet, dass** die Klimatisierungsanordnung (200) ein Gehäuse (30) aufweist, welches einen schaltschrankseitigen Gehäusebereich (301) und einen außenseitigen Gehäusebereich (302) sowie eine zwischen dem schaltschrankseitigen Gehäusebereich (301) und dem außenseitigen Gehäusebereich (302) angeordnete Trennwand (37) aufweist, welche den schaltschrankseitigen Gehäusebereich (301) und den außenseitigen Gehäusebereich (302) fluidisch voneinander trennen, wobei die Klimatisierungsanordnung (200) ferner einen Wärmetauscher (100) nach einem der vorhergehenden Ansprüche umfasst, wobei der Wärmetauscher (100), insbesondere vollständig, im schaltschrankseitigen Gehäusebereich (301) angeordnet ist,
wobei bevorzugt der Wärmetauscher (100) als Verdampfer (101) einer Kompressionskältemaschine (33) ausgebildet ist, die einen Kompressor (34), einen Kondensator (35) und eine Drossel (36) umfasst, wobei der Kompressor (34), der Kondensator (35) und die Drossel (36) in dem außenseitigen Gehäusebereich (301) der Klimatisierungsanordnung (200) angeordnet sind.

14. Klimatisierungsanordnung (200) nach Anspruch 13, wobei der Kältemittelzulauf (19) und der Kältemittelablauf (20) die Trennwand (37) durchgreifen, und/oder wobei die mindestens eine Kapsel (171, 172) bereichsweise an der Trennwand (37) anliegt und/oder bereichsweise die Trennwand (37) bildet.

15. Schaltschrank (300) mit einem Gehäuse (30), das eine Vielzahl elektronischer Komponenten (31) aufnimmt, **dadurch gekennzeichnet, dass** der Schaltschrank (300) einen Wärmetauscher (100) nach einem der Ansprüche 1 bis 12 und/oder eine Klimatisierungsanordnung gemäß einem der Ansprüche 13 oder 14 aufweist.
